# EUROPEAN PATENT APPLICATION

(11) **EP 4 506 611 A1**
(43) Date of publication of application: **12.02.2025**
(21) Application number: 24192865.4
(22) Date of filing: 05.08.2024
(51) Int. Cl.: F16P 3/08, F16P 3/14

(54) **ELECTRONIC SAFETY EQUIPMENT FOR MACHINES OR INDUSTRIAL PLANTS AND RELATED SAFETY METHOD**

(30) Priority: 10.08.2023 IT 202300017091
(71) Applicant: Pizzato Elettrica S.r.l., 36063 Marostica (Vicenza) (IT)
(72) Inventor: PIZZATO, Giuseppe, 36063 MAROSTICA (VI) (IT); SERAFIN, Diego, 36063 MAROSTICA (VI) (IT)
(74) Representative: Burchielli, Riccardo

(57) **Abstract**

An electronic safety equipment (1) comprising a safety switch (11) and an actuator (12) configured to be associated with a guard (40) of a machine (50) or industrial plant and to interact with each other upon opening and closing of said guard (40). The safety switch (11) comprises switching means (30) configured to assume an active or inactive state and to send a safety signal (B) to enable the start of the machine (50) or plant, a control unit (20) connected to the switching means (30) and configured to activate them according to at least a presence signal (A) of the actuator (12) in the proximity of said safety switch (11) and an antenna circuit (10) configured to detect whether said actuator (12) is in proximity of the safety switch (11) and to send the presence signal (A) to the control unit (20). The antenna circuit (10) comprises a resonant electrical circuit (6) with a plurality of tuning auxiliary elements (7) arranged i parallel to at least one first inductor (61) and at least one first capacitor (62). Are further provided selection means (3), associated with said tuning auxiliary elements (7) and configured to include or exclude one or more of the tuning auxiliary elements (7) in or from said resonant electric circuit (6) to modify the inductance and/or capacitance of the resonant electric circuit (6) and obtain a desired tuning frequency value of the resonant electric circuit (6).

## Description

The present invention relates generally to electronic safety equipment for industrial machines and plants.

### Field of invention

The invention is in the technical field of safety devices, particularly in the technical field of safety devices applied to machines and/or industrial plants.

In particular, the context of the present invention is RFID-type electronic safety switches. In this context, the safety switch, in order to activate its safe outputs and, consequently, send a consensus signal for the safe starting of a machine and/or industrial plant, must at least detect a proper actuator in the proximity.

Depending on the requirements and needs, the equipment object of the present invention can also be applied to safety switches that provide for locking the actuator; in this case, the safety switch, in order to activate its safe outputs must necessarily detect in proximity the correct actuator (closed guard) and lock it to itself (closed and locked guard).

### Prior Art

A multitude of industrial machines of varying complexity, size, and difficulty of use are used daily in the industrial environment.

Such industrial machines, because of their constituent characteristics and use, present a multiplicity of hazards and elements to which attention must be paid.

In fact, to protect users and operators, systems and devices are used to guard access and hazardous areas of such industrial machines.

Traditionally, accesses are protected by guards, such as doors, gates, shutters, covers, and other elements or devices that, when closed, prevent users from being able to reach hazardous areas or accidentally come into contact with such industrial machines or equipment.

To monitor the status of the guards protecting accesses, it is known to use electronic security systems, which usually comprise a first device attached to a fixed part of the guard and a second device attached to a movable part of the guard, such that when access is closed, the second device is in near proximity to the first device.

Usually, the first device includes an antenna circuit to recognize in wireless mode when the second device is in proximity to the first device.

To enable this, the second device in turn includes an RFID transponder that, when excited by the signal transmitted by the antenna circuit, generates a response signal.

This response signal is in turn received by the antenna circuit and can be processed by the first device so that it recognizes that the second device is in its proximity and, consequently, that the guard is closed.

A disadvantage of known devices is that the electronic components in the antenna circuit typically have an effective value within a fairly wide tolerance range from their nominal purchase value. For example, an inductor or capacitor may have a tolerance of +/-10% from their nominal value of inductance or capacitance. Therefore, the actual resonant frequency of the antenna circuit of known devices may also be far from its nominal resonant frequency.

This has very negative effects on the performance of the antenna circuit of the devices such as, for example, low accuracy with which the transponder is recognized or performance variability between different devices.

These drawbacks are further worsened if known devices are installed and used in environments subject to high temperature variations, such as on the order of 90-100°C or more.

### Aim of the invention

Thus, the aim of the present invention is to provide an electronic safety equipment capable of solving the above-mentioned inconveniences and critical issues.

Another aim of the present invention is to provide an electronic safety equipment capable of protecting and guarding access and hazardous areas of industrial machines.

Further aim of the present invention is to provide an electronic safety equipment for controlling and managing mobile guards and other safety elements already known and present in the market.

Another aim of the present invention is to provide electronic safety equipment capable of managing the tolerances of various components.

Further aim of the present invention is to provide an electronic safety equipment capable of adapting its characteristics to the temperature of the environment in which it is installed.

Another aim of the present invention is to provide an electronic safety equipment that is simple and inexpensive to realize.

A further aim of the present invention is to provide electronic safety equipment that can be easily installed and used on new or existing industrial machines and systems.

These and other aims are achieved by electronic safety equipment according to the attached independent claim.

Further detailed technical characteristics are given in the attached dependent claims.

### Brief description of the figures

- The present invention will now be described, by way of example but not limitation, according to some of its preferred embodiments, and with the aid of the attached figures, in which:
   - figures 1 to 4 are schematic representations of the components of the electronic safety equipment according to respective embodiments of the invention;
   - figures 5 to 8 are schematic representations of a component of the electronic safety equipment according to respective embodiments of the invention;
   - figure 9 is a schematic top view of a machine protected by a guard employing the electronic safety equipment according to the invention;

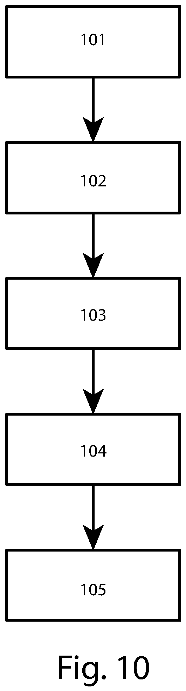

   - figure 10 is a flow chart illustrating how the electronic safety equipment according to the invention operates.

### Detailed description

Referring to the figures mentioned, preferred embodiments of an electronic safety equipment according to the invention are represented.

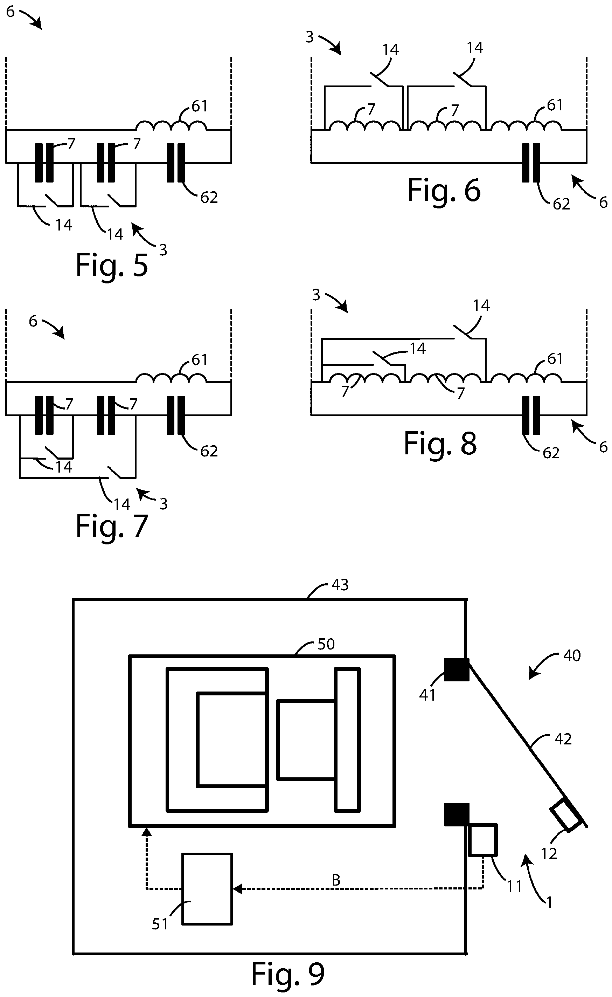

Referring to the above figures, the electronic safety apparatus 1 object of the invention comprises a first electronic safety device, hereafter safety switch 11, for example fixed to the fixed part 41 of a guard 40 of a protective barrier 43 for machines 50 or industrial plants, and a second electronic safety device, hereafter actuator 12, for example fixed to the movable part 42 of the guard 40 itself. Referring to the attached figure 5, the safety switch 11 and actuator 12 installed, for example, on a guard 40 of an industrial machine 50 can be seen.

Again referring to figure 5, the guard 40 comprises a door in which the safety switch 11 is fixed to the fixed frame 41 of the door (fixed part) and the actuator 12 to the leaf 42 of the door (movable part).

When the door is closed, safety switch 11 detects the proximity of actuator 12, signifying that the door is closed.

In a first embodiment, according to the present invention, the actuator 12 comprises a transponder 63 and the safety switch 11 comprises switching means 30, a control unit 20, and an antenna circuit 10 configured to excite the transponder 63 when the actuator 12 is in the proximity of the safety switch 11 to detect its presence.

The switching means 30 are controlled by the control unit 20 and can assume an active state and an inactive state distinguishable from each other.

In the present case, the switching means 30 comprise one or more safe outputs 31 of the type OSSD (Output Signal Switching Device) each of which can assume at least an active state and an inactive state distinguishable from each other.

By way of example only, a secure output in the active state transmits a signal and assumes a logical state of "1" or "ON" while in the inactive state it transmits no signal and assumes a logical state of "0" or "OFF."

Even more preferably, the switching means 30 comprise at least two independent and redundant safe outputs 31 of the OSSD type.

In other possible embodiments, the switching means 30 may also be of other known types and comprise electronic contacts of mechanical, electromechanical, relay, or any other electrical, electronic, or electromechanical element that can switch selectively from an active state, in which signal transmission is permitted, to an inactive state, in which signal transmission is not permitted.

The switching means 30 are connected to a communication interface (not shown) configured to transmit one or more signals (associated with the state of the switching means 30) to one or more command devices 51 external to the safety switch 11. Specifically, the communication interface is configured to transmit at least one signal encoding the state of the switching means 30.

By way of example only, the communication interface could comprise one or more connectors or a communication BUS, such as an IO-Link, IO-Link Safety or ProfiSafe or ProfiNet type, or it could be wireless or it could be implemented in any of the combinations mentioned or known in the state of the art.

In use, the communication interface may be linked or connected to a command device 51 configured to control the plant or machine 50 based on the signal associated with the state of the switching means 30.

The command device 51 can comprise a PLC or a safety module or a contactor connected to the power supply of the plant or machine 50 or other similar or assimilated devices or any combination thereof.

Exemplifying, if the state of the switching means 30 is inactive, the control device will not allow the machine 50 to start or interrupt its operation.

Alternatively, the communication interface can be linked or connected directly to the machine 50.

The antenna circuit 10 of the safety switch 11 is configured to detect whether or not the actuator 12 is in close proximity to the safety switch 11 and to transmit, directly or indirectly, a presence signal A to the control unit 20 if such proximity is detected.

The activation of the switching means 30 by the control unit 20 is performed at least on the basis of the said presence signal A.

For example, the control unit 20 may be configured to activate the switching means 30 if the presence signal A communicates that the actuator 12 is in proximity to the safety switch 11, in other words that the guard 40 is closed.

Otherwise, in cases where the safety switch 11 also comprises a locking mechanism (not shown) for mechanically or magnetically, by means of an electromagnetic field, locking the actuator 12 to itself, the control unit 20 may be configured to activate the switching means 30 if the presence signal A indicates that the actuator 12 is in the proximity of the safety switch 11 and if it simultaneously detects that the actuator 12 is also locked by the locking mechanism, in other words, that the guard 40 is closed and locked.

In such cases, the switching means 30 sends a safety signal B indicating that the machine 50 is in a safe state and can therefore be started.

Exemplifying this, in embodiments in which the switching means 30 comprise two safe outputs 31 OSSDs, the safety signal B is identified in the active state of both safe outputs 31 OSSDs, or alternatively a first safe output 31 OSSD is activated when the guard is closed while the second safe output 31 OSSD is activated when the guard is locked.

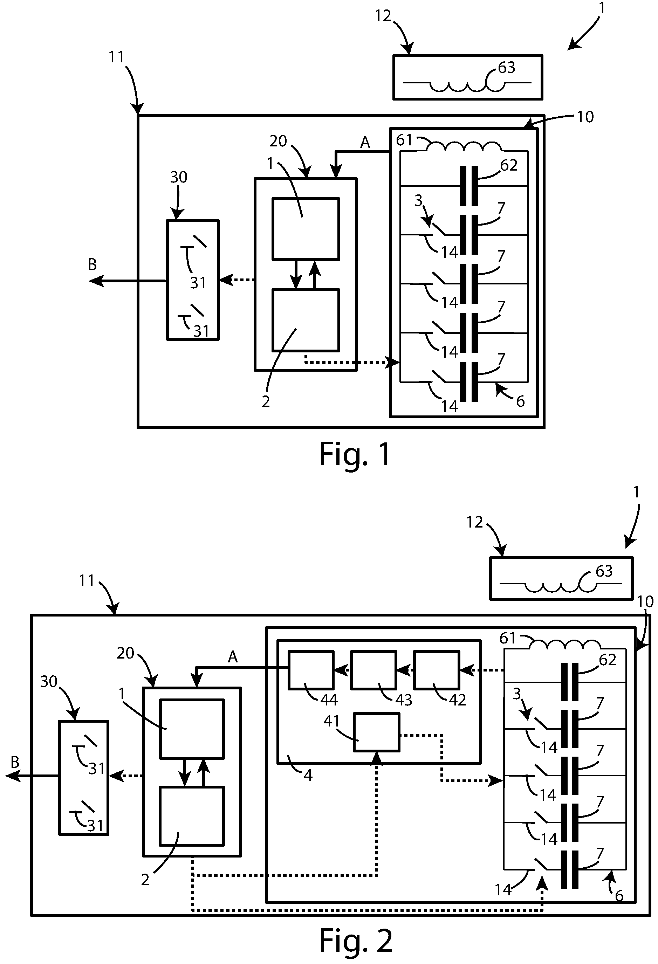

In exemplary and preferred embodiments, the control unit 20 comprises at least a first microcontroller 1 and at least a second microcontroller 2, interconnected with each other, to communicate redundantly (figures 1 to 4). In other embodiments not shown, the control unit 20 comprises a single microcontroller to perform the functions of the two microcontrollers 1 and 2.

Advantageously, the two microcontrollers 1 and 2 are connected to the switching means 30 to control them and switch them from the active state to the inactive state, or vice versa. For example, in embodiments in which the communication means 30 comprise two safe outputs 31 OSSDs, the first microcontroller 1 is connected to a first secure output and the second microcontroller 2 is connected to a second secure output.

The antenna circuit 10 comprises a resonant electrical circuit 6 comprising at least one first inductor 61 in parallel with at least one first capacitor 62 and a plurality of tuning auxiliary elements 7

As will be detailed below, when the resonant electric circuit 6 is supplied with power, it excites the transponder 63 of the actuator 12 which modulates the field generated by the resonant electric circuit 6 by changing the shape of its oscillation wave and generating the presence signal A.

Preferably, the tuning auxiliary elements 7 comprise a plurality of auxiliary capacitors arranged in parallel to said first inductor 61 and said first capacitor 62 (figures 1 to 4).

Alternatively, in embodiments not shown, the tuning elements 7 comprise a plurality of auxiliary inductors arranged in parallel with said first inductor 61 and said first capacitor 62.

In further embodiments, schematically represented in figures 5 and 7 depicting only the resonant electrical circuit 6, the tuning auxiliary elements 7 comprise at least one auxiliary capacitor arranged in series with said first capacitor 62.

In other possible embodiments, schematically represented in figures 6 and 8 illustrating only the resonant electrical circuit 6, the tuning auxiliary elements 7 comprise at least one auxiliary inductor arranged in series with said first inductor 61.

The safety switch 11 also comprises selection means 3 associated with said tuning auxiliary elements 7 and configured to include or exclude one or more of said tuning auxiliary elements 7 in or from said resonant electrical circuit 6. Thus, by means of the selection means 3 it is possible to modify the overall inductance and/or capacitance of the resonant electric circuit 6 and obtain a desired value of tuning frequency thereof.

Advantageously, in this way, it is possible to enable or disable one or more tuning auxiliary elements 7 to obtain the desired frequency, for example, but not necessarily 125 kHz or other frequencies, even in cases where the actual values of inductance and capacitance of the first inductor 61 and the first capacitor 62 do not correspond to their respective nominal values. This makes it possible to industrially produce safety switches 11 having their respective resonant circuits always tuned to the same desired tuning frequency, guaranteeing the desired performance for all safety switches 11 produced, minimising production waste and reducing production time and costs.

In fact, by changing the capacitance or inductance of the resonant circuit 6 it is possible to tune its frequency to a desired frequency.

For example, in case the antenna is to be tuned to 125 KHz, if the starting frequency of the resonant circuit 6 is greater than 125 KHz, capacitance is added in parallel or in series to the first inductor 61 and/or the first capacitor 62, if instead the starting frequency is less than 125 KHz, capacitance is removed in parallel or in series to the first inductor 61 and/or the first capacitor 62. In fact, when tuning the antenna circuit 10, in order to achieve the desired tuning frequency, the control unit 20 will include or exclude from the resonant circuit 6 one or more of the tuning auxiliary elements 7 with their respective capacitances by means of the selection means 3.

The selection means 3 are controlled by the control unit 20 and may comprise, for example, one or more switches 14 each of which is electrically associated with at least one respective tuning auxiliary element 7 to include or exclude it from the resonant electrical circuit 6.

For example, in embodiments wherein the tuning auxiliary elements 7 are electrically connected in parallel with the first inductor 61 and the second inductor 62, each switch 14 is electrically arranged in series with a respective tuning auxiliary element 7. In this case, when a switch 14 is open the respective associated tuning auxiliary element 7 is excluded from the resonant electric circuit 6. Furthermore, when a switch 14 is closed, the respective associated tuning auxiliary element 7 is included in the resonant electric circuit 6.

Alternatively, in embodiments in which the tuning auxiliary elements 7 are electrically connected in series with the first inductor 61 or the second inductor 62, each switch 14 is electrically arranged in parallel with at least one tuning auxiliary element 7 (figures 5 to 8). In this case, when a switch 14 is closed, the respective associated tuning auxiliary element 7 is bypassed, which will therefore be excluded from the resonant electric circuit 6. Also, when a switch 14 is open, the respective associated tuning auxiliary element 7 is included in the resonant circuit 6.

The switches 14 may be of the MOS, MOSFET, transistor, electromechanical or other types.

It should be noted that the position of the selection means 3 in the accompanying figures is for illustrative purposes only and is not limiting.

In one embodiment, the selection means 3 are integrated in the control unit 20 for example in one of the first microcontroller 1 or the second microcontroller 2.

In another embodiment, the selection means 3 are external to the control unit 20 and are controlled by one among the first microcontroller 1 or the second microcontroller 2 (fig. 1 and 2).

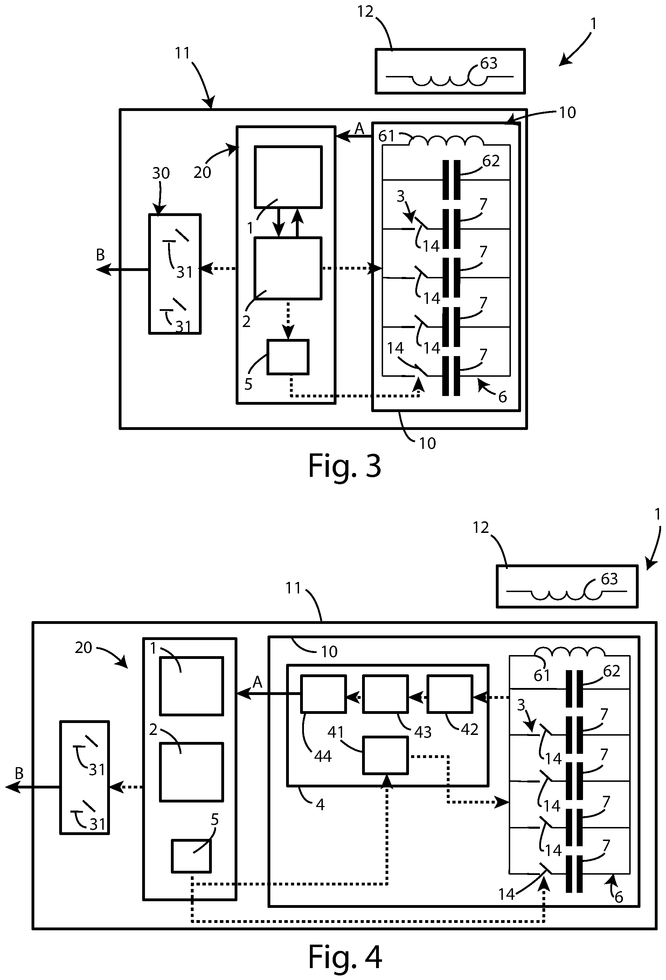

In another embodiment, the control unit 20 comprises a third microcontroller 5 (figures 3 and 4) and the selection means 3 are external to and controlled by the third microcontroller 5. In a further embodiment, the third microcontroller 5 comprises the selection means 3. In this case, the third microcontroller 5 is preferably a programmable logic component, for example of the FPGA (Field Programmable Gate Array) or CPLD (Complex Programmable Logic Device) type.

Preferably, the third microcontroller 5 also comprises an internal memory in which is stored information encoding the combination of the tuning auxiliary elements 7 to be excluded, or to be activated, in order to obtain correct tuning at the desired frequency (for example 125 KHz).

When the electronic safety equipment is in use, one of the first and second microcontrollers 1, 2 reads in the internal memory of the third microcontroller 5 the information encoding the combinations of the tuning auxiliary elements 7 to be excluded.

After carrying out this reading, the first or second microcontroller 1, 2 which carried out the reading communicates to the third microcontroller 5 which selection means 3 to operate in order to exclude or include the tuning auxiliary elements 7 required to obtain the desired tuning of the resonant electric circuit 6.

The resonant electric circuit 6 can be connected directly to the control unit 20 in order to be powered by it and to transmit the presence signal A to it (figures 1 and 3).

Alternatively, the antenna circuit 10 may comprise a signal processing unit 4 (figures 2 and 4), which is connected to the resonant electric circuit 6 to feed it and to process the signal generated by it. The signal processing unit 4 is then configured to transmit to the control unit 20 a digital presence signal A obtained by processing the analogue signal output from the resonant electric circuit 6.

The signal processing unit 4 may comprise a control circuit 41, a peak detector 42, a filter stage 43 and a decoder stage Manchester 44.

The control circuit 41 generates a sinusoidal signal having a frequency related to the ratio of inductance to capacitance of the resonant circuit 6 and feeds it to the resonant circuit 6.

The control circuit 41 is also connected to the control unit 20 which controls its activation and the operating voltage, in other words the voltage between peak and valley and the average voltage of the sinusoidal signal.

By way of example, one of the first and second microcontrollers 1, 2 transmits to the third microcontroller 5 a signal requesting the switching on/off of the control circuit 41 and encoding the voltage between peak and valley and the average voltage, at which the oscillating circuit 41 is to work (figure 4). Then the third microcontroller 5 controls the activation of the control circuit 41 and sets its working voltage. Alternatively, in embodiments in which the third microcontroller 5 is not provided, one of the first and second microcontrollers 1, 2 directly controls the activation of the control circuit 41 (figure 2).

When the resonant electric circuit 6 is energized, it excites the transponder 63 of the actuator 12 which modulates the field generated by the resonant electric circuit 6 by changing the shape of the oscillation wave.

The peak detector 42 of the signal processing unit 4 is in turn configured to detect the difference between the peaks of the wave modified by the transponder 63 of the actuator 12 and generate an analogue signal. The peak detector 42 is connected to the filter stage 43 to transmit said analogue signal to the same.

Filter stage 43 is configured to filter this analogue signal in order to eliminate any noise and generate a filtered signal. The filter stage 43 is in turn connected to the decoding stage Manchester 44 to transmit said filtered signal to said decoding stage 44.

The decoding stage Manchester 44 is configured to digitise this filtered signal. By way of example, the decoding stage Manchester 44 generates a digital binary signal. This digital binary signal corresponds to the presence signal A and comprises identification code of the transponder 63 of the actuator 12. The decoding stage Manchester 44 is connected to the control unit 20 to send the presence signal A to the control unit 20.

The control unit 20, at least on the basis of the presence signal A, activates or deactivates the switching means 30 and, thus, the safe outputs 31 OSSD to send a safety signal B indicating that the machine 50 or industrial plant is in a safe state and can be started.

Optionally, the safety switch 11 comprises at least one auxiliary sensor (not shown) configured to detect at least one environmental parameter and connected to said control unit 20. For example, the auxiliary sensor may be configured to detect the temperature of the environment in which the safety switch 11 is positioned.

In this case, the control unit 20 is also configured to control the selection means 3 according to the environmental parameter detected by the auxiliary sensor.

By way of example, a characteristic curve can be stored in the control unit 20 which relates the value of the environmental parameter to the capacitance value of the resonant circuit 6 suitable for ensuring the desired tuning of the resonant circuit 6. In this way, as the environmental parameter changes, the control unit 20 can control the selection means 3 to vary the capacitance value of the resonant circuit 6 according to the measured environmental parameter.

Figure 6 shows an exemplified block diagram of the working steps of the electronic safety equipment 1 object of the invention.

As can be seen from figure 6, one identifies:
- a first step 101, according to which, when the guard 40 is closed, the antenna circuit 10 detects that the actuator 12 is in the proximity of the safety switch 11;
- a second step 102, according to which the antenna circuit 10 sends a presence signal A to the control unit 20;
- a third step 103, according to which the control unit 20 activates the switching means 30;
- a fourth step 104, according to which the switching means 30 send a safety signal B identifying that the system or machine 50 is in a safe state and can be started.

In some embodiments, there is also a step 105 whereby the safety switch 11 locks the actuator 12 to itself.

The present invention also refers to a safety system comprising a machine 50 or industrial plant and electronic safety equipment 1 according to the present invention.

From the description made, the characteristics of the electronic safety equipment, which is the object of the present invention, are clear, as are its advantages.

Finally, it is clear that numerous other variations may be made to the equipment in question, without departing from the principles of novelty inherent in the inventive idea, just as it is clear that, in the practical implementation of the invention, the materials, shapes and sizes of the details illustrated may be any as required and the same may be substituted for equivalent ones.

Where features and techniques mentioned in any claim are followed by reference marks, such reference marks have been appended for the sole purpose of increasing the intelligibility of the claims and, accordingly, such reference marks have no limiting effect on the interpretation of each element identified by way of example by such reference marks.

## Claims

1. Electronic safety equipment (1) comprising a safety switch (11) and an actuator (12) configured to be associated with a guard (40) of a machine (50) or industrial plant and to interact with each other upon opening and closing of said guard (40), wherein said safety switch (11) comprises:
a switching means (30) configured to assume an active or inactive state and to send a safety signal (B) to enable the start of said machine (50) or plant;
a control unit (20) connected to said switching means (30) and configured to activate said switching means according to at least a presence signal (A) of said actuator (12) in the proximity of said safety switch (11);
an antenna circuit (10) configured to detect whether said actuator (12) is in proximity of said safety switch (11) and to send said presence signal (A) to said control unit (20);
wherein said antenna circuit (10) comprises at least one resonant electrical circuit (6) comprising in turn at least one first inductor (61) and at least one first capacitor (62) and a plurality of tuning auxiliary elements (7);
**characterised in that** said electronic safety equipment (1) further comprises selection means (3), associated with said tuning auxiliary elements (7) and configured to include or exclude one or more of said tuning auxiliary elements (7) in or from said resonant electric circuit (6) to modify the inductance and/or capacitance of said resonant electric circuit (6) and obtain a desired tuning frequency value of said resonant electric circuit (6).

2. Electronic safety equipment according to claim 1, **characterised in that** said actuator (12) comprises a transponder (63) and said antenna circuit (10) is configured to excite said transponder (63) when said actuator (12) is in proximity of said security switch (11) to detect its presence.

3. Electronic safety equipment according to at least one of the preceding claims, **characterised by** the fact that said control unit (20) comprises a first microcontroller (1) and a second microcontroller (2) interconnected each other to communicate in a redundant manner and connected to said switching means (30) for controlling them and switching them from the active to the inactive state, or vice versa.

4. Electronic safety equipment according to at least one of the preceding claims, **characterised in that** said tuning auxiliary elements (7) comprise at least one auxiliary capacitor or auxiliary inductor arranged in parallel with said first inductor (61) and said first capacitor (62).

5. Electronic safety equipment according to at least one of claims 1 to 4, **characterised in that** said tuning auxiliary elements (7) comprise at least one auxiliary inductor or capacitor arranged in series with said first inductor (61) or said first capacitor (62) respectively.

6. Electronic safety equipment according to at least one of the preceding claims, **characterised by** the fact that said selection means (3) are controlled by said control unit (20) and comprise one or more switches (14), each of which is arranged electrically in parallel or in series with a respective tuning auxiliary element (7).

7. Electronic safety equipment according to any one of claims 3 to 6, **characterised in that** said control unit (20) comprises a third microcontroller (5) and said selection means (3) are controlled by said third microcontroller (5).

8. Electronic safety equipment as in claim 7, **characterised in that** said third microcontroller (5) comprises said selection means (3) and is preferably of the CPLD or FPGA type.

9. Electronic safety equipment according to at least one of the preceding claims, **characterised in that** said antenna circuit (10) comprises a signal processing unit (4) connected to said resonant electric circuit (6) and configured to transmit to said control unit (20) said presence signal (A) in digital form obtained by processing the analogue signal output from said resonant electric circuit (6).

10. Electronic safety equipment according to any one of the preceding claims 9, **characterised by** the fact that said safety switch (11) comprises at least one auxiliary sensor configured to detect at least one environmental parameter connected to said control unit (20) and by the fact that said control unit (20) is configured to control said selection means (3) according to said environmental parameter detected by said auxiliary sensor.

11. A safety system comprising a machine (50) or industrial plant and a safety electronic apparatus (1) according to at least one of the preceding claims, **characterised in that** said switching means (30) are connected to a communication interface configured to transmit one or more signals associated with the state of said switching means (30) to a command device (51) external to said safety switch (11) configured to command said machine (50) or plant on the basis of a signal associated with the state of said switching means (30).
